# EUROPÄISCHE PATENTANMELDUNG

(11) **EP 0 878 947 A2**
(43) Veröffentlichungstag der Anmeldung: **18.11.1998**
(21) Anmeldenummer: 98107988.2
(22) Anmeldetag: 30.04.1998
(51) Int. Cl.: H04M 3/42, H04Q 3/00, H04M 3/50, H04M 7/00

(54) **Verfahren zur Auswahl von Menüpunkten und Kommunikationsnetz**

(30) Priorität: 14.05.1997 DE 19720203
(71) Anmelder: SIEMENS AKTIENGESELLSCHAFT, 80333 München (DE)
(72) Erfinder: Moritz, Peter, 85540 Haar (DE)

(57) **Zusammenfassung**

Verfahren zur Auswahl von akustisch dargestellten Menüpunkten, bei dem die Auswahl eines Menüpunktes auf einer Zuordnung zwischen dem Zeitpunkt der Darstellung des Menüpunktes und dem Zeitpunkt der Eingabe der Auswahlentscheidung basiert.

## Beschreibung

Die Erfindung bezieht sich auf ein Verfahren zur Auswahl von akustisch dargestellten Menüpunkten, sowie auf ein Kommunikationsnetz, insbesondere ein Intelligentes Netz zur Durchführung des Verfahrens.

Häufig erfolgt die Auswahl von Diensten oder Informationen, die über Kommunikationsnetze verfügbar sind, über eventuell computergesteuerte Ansageeinrichtungen. Dabei werden oft die einzelnen zur Auswahl stehenden Möglichkeiten als sogenannte Menüpunkte eventuell mit Numerierung nacheinander angesagt. Nach der Ansage aller Menüpunkte wählt der Nutzer den gewünschten Menüpunkt durch die Betätigung der Zifferntaste, deren Zahlenwert der Nummer dieses Menüpunktes entspricht, aus. Häufig ist es auch möglich die Eingabe des Zahlenwertes, der dem gewünschten Menüpunkt entspricht über die Sprache einzugeben. Beispiele hierfür sind die Auswahl von Funktionen, Diensten oder Einstellungen innerhalb Intelligenter Netze oder die Auswahl von Diensten und Informationen, die von Banken zur Verfügung gestellt werden.

Diese bekannten Verfahren sind allerdings sehr zeitaufwendig und außerdem sehr anfällig für Bedienfehler.

Der Erfindung liegt daher die Aufgabe zugrunde, ein Verfahren und ein Kommunikationsnetz anzugeben, mit denen die Auswahl von akustisch dargestellten Menüpunkten möglichst schnell und einfach erfolgen kann.

Diese Aufgabe wird durch ein Verfahren mit Merkmalen nach Anspruch 1 und ein Kommunikationsnetz mit Merkmalen nach Anspruch 6 gelöst. Weiterbildungen der Erfindung ergeben sich aus den Unteransprüchen.

Die Erfindung beruht also auf dem Gedanken, daß die Auswahl eines Menüpunktes, der eine Funktion zum Einwirken auf über ein Kommunikationsnetz zur Verfügung gestellte Dienste repräsentiert, auf einer Zuordnung zwischen dem Zeitpunkt der Darstellung des Menüpunktes und dem Zeitpunkt der Eingabe der Auswahlentscheidung basiert.

Unter Einwirkung auf einen Dienst versteht man dabei auch die Auswahl von Diensten, die Steuerung eines Dienstes, das Auslösen eines Dienstes, die Einstellung von Diensten bzw. von Dienstparametern oder die Auswahl einer anderen Menüebene zur Einwirkung auf den Dienst.

Die Auswahlentscheidung des Dienstnutzers kann über ein Bedienelement oder eine oder mehrere bestimmte Tasten oder über irgendeine Taste erfolgen, die gegebenenfalls am Kommunikationsendgerät angebracht sind. Es ist auch möglich, daß die Auswahlentscheidung durch ein oder mehrere bestimmte Sprachsignale des Dienstnutzers oder über irgendein akustisches Signal erfolgt. Die Auswahl eines Menüpunktes hat zur Folge, daß sofort oder verzögert die diesem Menüpunkt zugeordnete Funktion ausgeführt wird bzw. die entsprechende Einwirkung auf den Dienst ausgelöst wird.

Dabei basiert die Auswahl eines bestimmten Menüpunktes also nicht auf einer dem Menüpunkt zugeordneten Nummer, sondern auf der zeitlichen Beziehung zwischen der Darstellung des Menüpunktes und der Eingabe einer Auswahlentscheidung.

Bei einer Weiterbildung der Erfindung wird außer dem Zeitpunkt der Eingabe einer Auswahlentscheidung keine Information über den auszuwählenden Menüpunkt vom Kommunikationsendgerät an das Kommunikationsnetz bzw. die entsprechende Steuer- oder Ansageeinrichtung übermittelt.

Durch die Erfindung wird erreicht, daß insbesondere in Fällen, in denen nicht alle Menüpunkte einer Menüebene gleichzeitig dargestellt werden können, wie dies beispielsweise bei akustischer Darstellung der Menüpunkte immer der Fall ist, eine einfache und schnelle Auswahl von Menüpunkten erfolgen kann und dabei Bedienfehler nahezu ausgeschlossen werden können. Außerdem ist die Anzahl der zur Auswahl stehenden Menüpunkte nicht durch die Anzahl der Tasten begrenzt.

Eine bevorzugte Ausführungsform sieht vor, daß die Auswahl des Menüpunktes erfolgt, zwischen dessen Darstellung und der Eingabe der Auswahlentscheidung eine bestimmte Zeitspanne nicht überschritten wird.

Bei einer weiteren bevorzugten Ausführungsvariante der Erfindung erfolgt die Auswahl des Menüpunktes, während dessen Darstellung die Eingabe der Auswahlentscheidung erfolgt.

Bei einer besonders bevorzugten Ausführungsform der Erfindung erfolgt die Eingabe der Auswahlentscheidung über eine eigens für diesen Zweck vorgesehene Taste. Diese kann dabei eine besondere Bezeichnung oder Form haben oder an einer besonders exponierten Stelle einer Eingabevorrichtung, beispielsweise eines Kommunikationsgerätes angebracht sein.

Zur Erläuterung von Ausführungsformen der Erfindung dienen die nachstehend aufgelisteten Figuren.

Es zeigen:
FIG 1 eine schematische Darstellung eines intelligenten Kommunikationsnetzes
FIG 2 eine schematische Darstellung einer Ausführungsform einer Anordnung zur Auswahl von Menüpunkten
FIG 3 drei Möglichkeiten der zeitlichen Zuordnung zwischen der Darstellung der Menüpunkte und der Eingabe der Auswahlentscheidung.

Die Erfindung wird im folgenden anhand bevorzugter Ausführungsbeispiele und mit Hilfe der Figuren näher beschrieben.

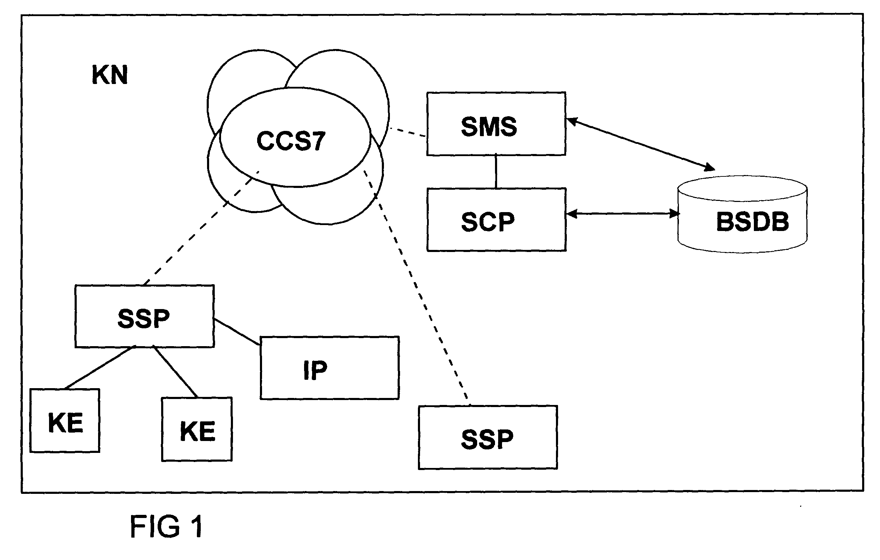

Figur 1 zeigt wesentliche Komponenten eines Intelligenten Netzes IN, das eine Architektur darstellt, um Dienste in einem Kommunikationsnetz KN anzubieten und zu steuern. Die Dienste-Intelligenz wird dabei als Overlay-Struktur getrennt von der physikalischen Netzinfrastruktur realisiert.

Der Service-Switching-Point SSP ist ein Dienste-Vermittlungspunkt mit Netzzugangs- und Vermittlungsfunktionen. Beim SSP kann es sich auch um digitale Vermittlungsstellen mit IN-spezifischen Triggerfunktionen handeln. Die IN-Triggerfunktion ist ein intelligenzunterstützender Mechanismus, der die IN-Anforderung anhand von Triggertabellen erkennt. So können in Abhängigkeit von Teilen einer Rufnummer (IN-Rufnummer) bestimmte Steuerprozeduren in einem mit dem SSP verbundenen Service-Control-Point (Dienstesteuerungspunkt) SCP ausgelöst werden.

SCPs sind zentrale Steuereinrichtungen des Netzes, die durch Datenverarbeitungseinrichtungen realisiert sind und die Dienstelogik der Steuerungsebene, die für den Verbindungsprozess verantwortlich ist, beinhalten. Die wesentlichen Aufgaben des SCP's sind das schnelle Umsetzen der IN-Rufnummer in eine echte Adresse (Zielrufnummer), die Ausführung der Applikation und das Entgegennehmen (vom SSP) und Weiterleiten von Verbindungsinformationen für die Gebührenerfassung und Statistik. Informationen zur Umsetzung der Rufnummer in eine echte Adresse (Zielrufnummer) sind in einer Datenbank BSDB gespeichert, die vom SCP jederzeit abgefragt werden und von einer zentralen Administration SMS geändert werden kann.

Das Service-Management-System SMS übernimmt die Netzmanagement-Funktionen. Das zentrale SMS ist netzweit für die Aktualisierung der Daten und der Software in den SCP's verantwortlich. So können hier neue IN-Dienste oder Dienstmerkmale erstellt und als Programmsysteme in das bestehende Netz eingebracht werden.

Die Intelligente Vermittlungszusatzeinrichtung Intelligent Peripheral IP mit vermittlungstechnischen Zusatzfunktionen kann einer oder mehreren Dienstevermittlungsstellen SSP zugeordnet werden. Diese Vermittlungszusatzeinrichtungen werden für den Empfang und die Weiterverarbeitung bzw. Interpretation von Anruferangaben innerhalb der IN-Dienste mit Benutzerinteraktion eingesetzt. Zu den typischen spezialisierten IP-Funktionen gehören auch Teilnehmeridentifizierung im Dialog, Sprachausgabe, Voice-Mail und Text zu Sprache-Wandlung.

Ein zentrales Zeichengabesystem CCS7 übernimmt den Nachrichtenaustausch vor allem für die Steuerung und Überwachung von Verbindungen sowie zum Betreiben seines eigenen Netzwerks.

Kommunikationsendgeräte KE können über ein derartiges Intelligentes Kommunikationsnetz KN Verbindungen zu anderen Kommunikationsendgeräten KE aufbauen und Dienste in Anspruch nehmen.

Die Speicherung und das Aussenden von akustisch dargestellten Menüpunkten zum Einwirken auf Dienste können auch in den IPs realisiert sein oder im Sinne von Kommunikationsendgeräten KE in sogenannten Call-Centers, in denen Anrufe zunächst durch Ahsagecomputer bedient und dann entsprechend einer definierten Steuerlogik weitergeleitet werden.

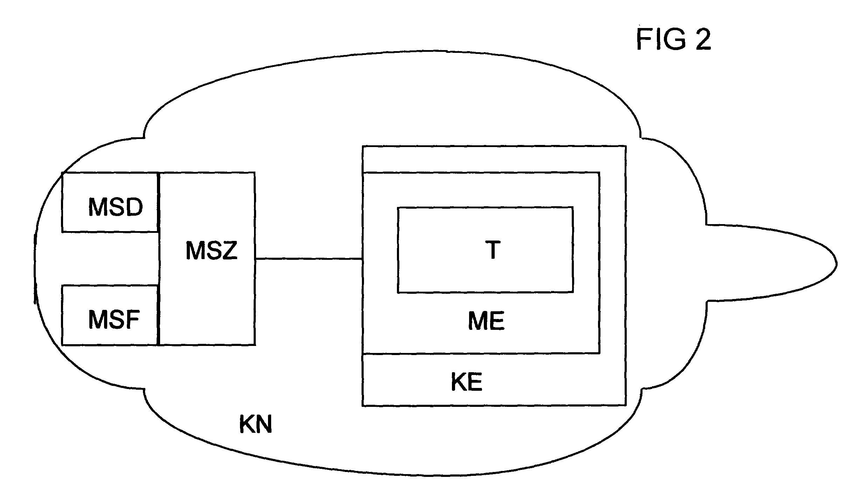

In Figur 2 sind Komponenten dargestellt, mittels deren Integration in ein Intelligentes Kommunikationsnetz, das erfindungsgemaße Verfahren mittels eines Intelligenten Kommunikationsnetzes realisiert werden kann.

Auf der Seite des Dienste- oder Informationsanbieters bzw. des Dienstteilnehmers können die für die akustische Darstellung der Menüpunkte nötigen Ansagen vorteilhaft an einem PC aufgezeichnet und digital in einem Speicher MSD gespeichert werden. Dabei kann es sich um Speicherbausteine oder andere Speichermedien wie beispielsweise Festplatten handeln. Außerdem werden die den einzelnen Menüpunkten zugeordneten Funktionen in einem Speicher MSF abgelegt. Ein derart ausgestalteter PC kann auch als Steuer- bzw. Ansageeinrichtung in ein Intelligent Peripheral IP des Dienste- oder Informationsanbieters bzw. ein Call Center eines Dienstteilnehmers integriert werden und den Ablauf einer Menüauswahlprozedur und die Ausgabe und Aussendung der Informationen über die akustische Darstellung der Menüpunkte steuern.

Nach einer Abfrage der akustischen Informationen bzw. der Auslösung der Menüansageprozeduren durch eine Steuereinrichtung eines Call Centers oder eines Service-Control-Points SCP oder durch die Eingabe von Steuersignalen an einem Kommunikationsendgerät KE werden die Informationen über die akustische Darstellung der Menüpunkte von den Speichermitteln MSD ausgegeben und über das Kommunikationsnetz KN zu dem entsprechenden Kommunikationsendgerät KE übermittelt.

Die Zuordnung von Menüpunkten zu deren Darstellungen, zu deren Funktionen und zu den Zeitabschnitten, innerhalb derer zur Auswahl eines Menüpunktes die Eingabe der Auswahlentscheidung erfolgen muß, kann über Zeigerstrukturen MSZ erfolgen. Zur Ermittlung des Zeitpunktes der Eingabe der Auswahlentscheidung können außerdem Zeitnehmer vorgesehen sein. Da allerdings nur Zeitabstände gemessen werden müssen, kann dies auch durch einen softwaregesteuerten Prozessor erfolgen. Der Zeitpunkt der Eingabe der Auswahlentscheidung kann auch in der entsprechenden Steuer- bzw. Ansageeinrichtung auf der Basis eines universellen (alle Auswahlentscheidungen umfassenden) von dem Kommunikationsendgerät KE zur Steuer- bzw. Ansageeinrichtung übermittelten Signales ermittelt werden.

Auf der Seite des Dienste- oder Informationsnutzers, der über ein Kommunikationsnetz KN mit dem Dienste- oder Informationsanbieter bzw. Diensteteilnehmers verbunden ist, sind außerdem Mittel zur Eingabe der Auswahlentscheidung ME vorgesehen. Dabei kann es sich um eine eigens für diesen Zweck vorgesehene universelle (alle Auswahlentscheidungen umfassende) Taste T handeln, die vorteilhafterweise an einer besonders exponierten Stelle des Kommunikationsgerätes angebracht ist und in besonderer Form oder besonderer Bezeichnung ausgeführt ist.

Zur Eingabe der Auswahlentscheidung ist aber auch jede andere Taste, eine Tastenkombination, mehrere bestimmte Tasten oder alle Tasten denkbar. Ferner ist es möglich die Auswahlentscheidung über ein akustisches Signal, beispielsweise ein Sprachsignal einzugeben. Dabei kann es sich in vorteilhafter Weise auch um ein bestimmtes Kennwort handeln, das mittels eines Spracherkennungsverfahrens auf der Seite des Dienste- oder Informationsanbieters bzw. Diensteteilnehmers leicht identifiziert werden kann.

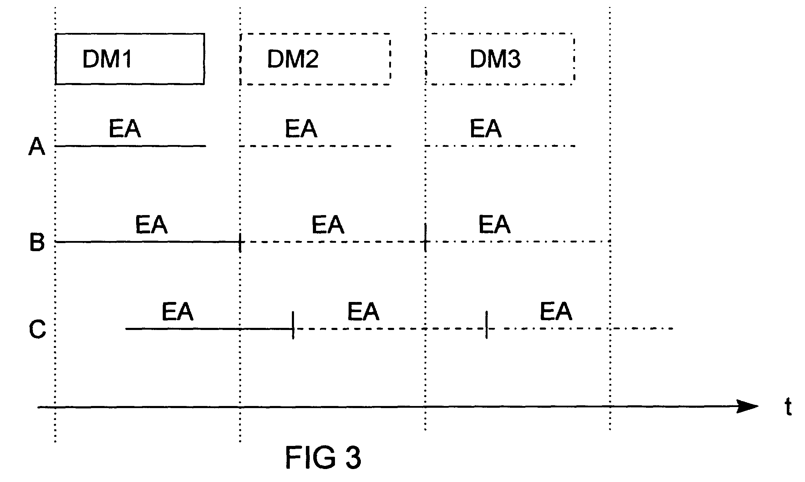

Der Ablauf einer Auswahl eines Menüpunktes ist in Figur 3 dargestellt. Die Darstellungen der einzelnen Menüpunkte (DM1, DM2, DM3) erfolgen zeitlich nacheinander, entweder mit oder ohne Pausen zwischen den einzelnen Menüpunkten. Dies kann auch durch eine Ansage der unterschiedlichen Menüpunkte geschehen.

Die Zeiträume, innerhalb derer die Eingabe einer Auswahlentscheidung (EA) die Auswahl eines bestimmten Menüpunktes und somit die Auswahl der diesem Menüpunkt zugeordneten Funktion bewirkt, können unterschiedlich definiert werden:
- A: erfolgt die Eingabe der Auswahlentscheidung (EA) während der Darstellung eines bestimmten Menüpunktes (MD1), so wird dieser Menüpunkt (MD1) ausgewählt.
- B: erfolgt die Eingabe der Auswahlentscheidung (EA) während der Darstellung eines bestimmten Menüpunktes (MD1) oder vor dem Beginn der Darstellung des nächsten Menüpunktes (MD2), so wird dieser Menüpunkt (MD1) ausgewählt.
- C: erfolgt die Eingabe der Auswahlentscheidung (EA) innerhalb eines bestimmten vorher festgelegten und einem bestimmten Menüpunktes (MD1) zugeordneten Zeitraum, so wird dieser Menüpunkt (MD1) ausgewählt.

## Patentansprüche

1. Verfahren zur Auswahl von Menüpunkten, die Funktionen zum Einwirken auf über ein Kommunikatlonsnetz (KN) zur Verfügung gestellte Dienste repräsentieren, bei dem
- Informationen über die akustische Darstellung der Menüpunkte zu einem Kommunikationsendgerät (KE) übertragen werden,
- die Menüpunkte mittels eines Kommunikationsendgerätes (KE) akustisch dargestellt werden,
- mittels des Kommunikationsendgerätes (KE) die Eingabe einer Auswahlentscheidung (EA) erfolgt, und
- die Auswahl eines Menüpunktes auf einer Zuordnung zwischen dem Zeitpunkt der Darstellung des Menüpunktes (DM) und dem Zeitpunkt der Eingabe der Auswahlentscheidung (EA) basiert.

2. Verfahren nach Anspruch 1,
dadurch gekennzeichnet,
daß die Auswahl des Menüpunktes erfolgt, zwischen dessen Darstellung (DM) und der Eingabe der Auswahlentscheidung (EA) eine bestimmte Zeitspanne nicht überschritten wird.

3. Verfahren nach Anspruch 2,
dadurch gekennzeichnet,
daß die Auswahl des Menüpunktes erfolgt, während dessen Darstellung (DM) die Eingabe der Auswahlentscheidung (EA) erfolgt.

4. Verfahren nach einem der vorhergehenden Ansprüche,
dadurch gekennzeichnet,
daß die Eingabe der Auswahlentscheidung über eine eigens für diesen Zweck vorgesehene Taste (T) eines Kommunikationsendgerätes (KE) erfolgt.

5. Verfahren nach einem der vorhergehenden Ansprüche,
dadurch gekennzeichnet,
daß die Auswahl eines Menüpunktes ausschließlich auf einer Zuordnung zwischen dem Zeitpunkt der Darstellung des Menüpunktes (DM) und dem Zeitpunkt der Eingabe einer universellen Auswahlentscheidung (EA) basiert.

6. Kommunikationsnetz (KN) mit
- Steuereinrichtungen (SCP), Übertragungseinrichtungen und Vermittlungseinrichtungen (SSP),
- Mitteln zur Speicherung (MSD) von akustischen Darstellungen von Menüpunkten,
- Mitteln zur Speicherung (MSF) von Funktionen, die den Menüpunkten zugeordnet sind,
- Mitteln, zur Zuordnung (MSZ) von Menüpunkten zu deren Darstellung, deren Funktionen und zu Zeitabschnitten, während derer zur Auswahl des Menüpunktes die Eingabe der Auswahlentscheidung erfolgen muß.

7. Kommunikationsnetz (KN) nach Anspruch 6, mit einem Kommunikationsendgerät (KE) mit einer eigens für die Eingabe der Auswahlentscheidung vorgesehenen Taste (T).
